# EUROPEAN PATENT SPECIFICATION

(11) **EP 0 613 801 B1**
(45) Date of publication and mention of the grant of the patent: **29.12.1997**
(21) Application number: 94850034.3
(22) Date of filing: 02.03.1994
(51) Int. Cl.: B60K 15/05, B62D 51/02

(54) **Cap for pressure vessel**
Deckel für Druckbehälter
Couvercle pour récipient sous pression

(30) Priority: 02.03.1993 SE 9300690
(43) Date of publication of application: 07.09.1994
(73) Proprietor: AB VOLVO, 405 08 Göteborg (SE)
(72) Inventor: Harde, Bo, S-417 17 Göteborg (SE)
(74) Representative: Kierkegaard, Lars-Olov

(56) References cited:
- EP-A- 0 068 710
- DE-A- 2 727 154
- FR-A- 2 334 523
- FR-A- 2 502 124
- GB-A- 2 026 450
- US-A- 4 498 599

## Description

The present invention relates to a tank cap for the filling pipe to a liquid container, said cap comprising a stop valve in a through-passsage between an inside and an outside of the cap, said stop valve having a valve body in which a valve element is displaceably arranged, said valve body being comprised of a surrounding wall connected to a bottom with an inlet opening and a top cover with an outlet opening as defined in the preamble of claim 1. Such a tank cap is known from the document US-A-4 498 599. Caps of this type are used in a number of applications, i.a. as fuel tank caps in automobiles. A conventional motor vehicle fuel tank cap is often equipped with a pressure equalizing valve to compensate for pressure variations in a volume of gas enclosed in the liquid container.

Such pressure variations arise, for example, when cold fuel is filled into the fuel tank of a motor vehicle, or when warm fuel in the tank cools off to the ambient temperature. In the latter case a sub-atmospheric pressure is formed in the tank. Since the fuel tank in modern vehicles is usually made of plastic, a sub-atmospheric pressure may deform the tank plastically or elastically, thus damaging sensitive components mounted in or on the tank.

Pressure equalization valves of the type described above make it possible to avoid such damage. However, this valve function can be a disadvantage in certain situations. For example, in a collision, when the fuel tank is subjected to external impact and is possibly deformed, or when the vehicle rolls over, the fuel in the tank can be pressed out into the filling pipe, and when it strikes the tank cap valve system, there is a risk of fuel leakage, within what is permissible under laws and specifications.

Present automobile legislation permits a volume on the order of magnitude of 15-20 ml of fuel to flow out into the surroundings in such a case, which nevertheless increases the risk of fire.

The purpose of the present invention is therefore to provide a tank cap of the type described by way of introduction which provides both an equalization of pressure variations in a gas volume enclosed in a fuel tank and emergency shut-off in the tank filling pipe of momentary liquid flow towards the cap. This is achieved according to the invention in a tank cap of the type described by way of introduction, in which the valve element is a valve disc arranged between said bottom and cover and provided with spacer means so disposed on its bottom side as to form pressure equalization gaps between the spacer means and the bottom when the valve disc rests in its normal position via said spacer means against said bottom, and that a surge of liquid against the inlet opening is stopped immediately, since the valve disc is displaceable by the surge of liquid, to an actuated position shutting off said outlet opening. This prevents all liquid flow through the tank cap.

In a suitable embodiment of the invention, the valve means is a valve disc displaceable between a normal position and an actuated position in the valve body, and the valve disc rests in its normal position via spacer means against the bottom of the valve body.

According to an advantageous embodiment of the invention, the valve element has on its top side an annular rubber gasket and on its underside a group of spacer means evenly distributed about the periphery of the valve element. Each spacer means is suitably in the form of a heel or a radially extending rib.

The tank cap has preferably, in addition to the liquid stop valve, a pressure equalizing valve of known type coupled in series therewith, to equalize pressure variations in a gas volume enclosed in the liquid container.

When such a tank cap is used in a motor vehicle, it fulfills, in addition to the requirements during normal operating con-ditions of pressure equalization, also, during extreme conditions, for example in a collision, acute shut-off requirements to prevent fuel leakage due to powerful momentary increases in pressure in the fuel tank.

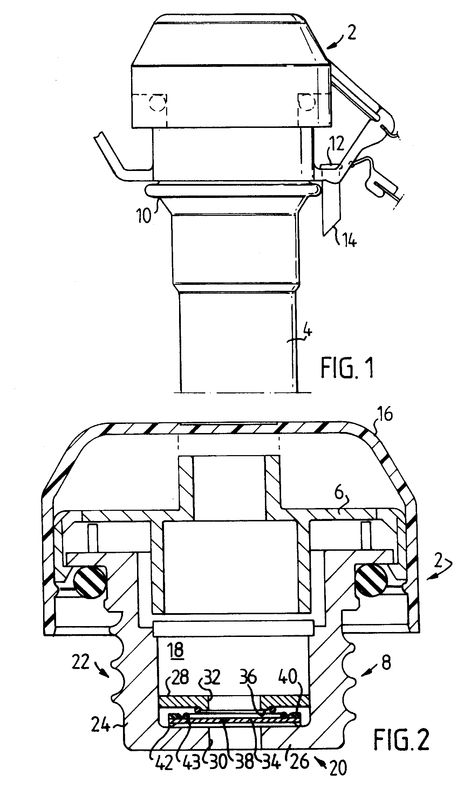

The invention will be described in more detail below with reference to an example shown in the accompanying drawing, where
- Figure 1: shows a tank cap according to the invention applied to the filling stub of a motor vehicle,
- Figure 2: shows the tank cap in section.

In the figures, 2 designates a fuel tank cap for a filling pipe 4 of a liquid container (a fuel tank, not shown). The cap is made of an upper body 6 and a lower body 8, which are joined to each other. The lower body of the cap can be mounted in the filling stub 10 of the pipe, said stub having a drain opening 12 with a drain pipe 14 for any fuel spilled when filling the tank. A shell 16 is snapped onto the upper body and it protects against any dirt coming into an equalization valve 18 (not shown in more detail here) of known type housed in the lower body. The valve 18 is intended to equalize any negative or positive pressure differences arising, due to temperature variations, between the interior of the tank and the surrounding atmosphere.

According to a preferred embodiment of the invention, a fluid stop valve 20 is arranged in the free end portion of the lower body 8 of the tank cap. The valve has a body 22 made in one piece with the lower body 8, said valve body having a cylindrical wall 24, a flat circular bottom 26 perpendicular to said wall, and a flat circular valve body cover 28 parallel to said bottom, said cover delimiting the valve body 22 against the inside of the lower body. The valve body cover 28 also forms a dividing wall between the valve device 18 and the stop valve 20, and constitutes at the same time the bottom of the valve device 18.

The valve body 22 has a circular inlet opening 30 and a circular outlet opening 32, and a valve element in the form of a valve disc 34 is freely displaceable inside the valve body, between the cover 28 and the bottom 26. The inlet opening 30 is arranged through the bottom of the body, co-axial to the centerline of the cap, and opens into the inside of the valve body, level with the upper surface of the bottom 26. The diameter of the opening 30 is preferably about 1/3 of the diameter of the bottom. The outlet opening 32 is arranged through the cover 28 of the valve body, and is also coaxial to the centerline of the tank cap. The valve body cover 28 has on its underside an annular sealing surface 36 adjacent and surrounding the outlet opening 32 of the valve body. The diameter of the outlet opening corresponds essentially to the diameter of the inlet opening. When there is a flow of liquid into the inlet opening 30, the valve disc is sealingly pressed against the annular sealing surface 36. In the center portion of the valve disc, there is a small pressure vent 38, the diameter of which is preferably between 0,5 and 1 mm. On the side of the valve disc facing the valve body cover, there is an annular rubber gasket 40 fixed so that its periphery coincides with the periphery of the valve disc. The opposite side of the valve disc is provided with spacer means 42, in the form of heels or ribs.

Gas can normally pass through the inlet opening 30, via the gaps between the spacers 42 out through the outlet opening 32 and on through the valve means 18 out to the atmosphere, or taking the reverse path if there is a partial vacuum in the tank. Since the valve disc 34 is freely movable both axially and radially, it is displaced when struck by a stream of liquid through the inlet opening 30, upwards against the outlet opening 32, thus shutting off this opening. In an alternative embodiment, there is a compression spring 43 disposed between the cover 28 and the disc 34, the purpose of which is to gently bias the disc 34 against the bottom 26 of the valve body 22 when the liquid stopping function is not actuated. This compression spring is also intended to return the valve disc 34 to its starting position after a sudden surge of fuel due to a collision, for example. A first variant of the spring 43 is in the form of a weak, slightly conical compression spring 43 disposed in the labyrinth seal area between the cover 28 and the disc 34.

In certain collisions, a peak occurs where the surge in pressure is maintained over a short period of time, more precisely 60 ms. When the valve disc 34 is pressed by the surge of liquid against the annular sealing surface 36 surrounding the outlet opening 32, the gasket 40 seals in cooperation with the sealing surface 36, thus forming a labyrinth seal 36,40 with the valve disc 34 pressed against the valve body cover 28. Through the pressure vent 38, however, the pressure is equalized after a short period of time, and the disc is released from the opening 32 and returns to its normal position. This pressure equalization occurs simultaneously with the reduction in excess pressure in the fuel tank, and therefore the ordinary valve means provides sufficient sealing thereafter.

In a liquid container which is subjected to external impact, for example in a collision, the fuel will be pressed out into the filling pipe 4, and if it reaches the ordinary valve means of the tank cap (i.e. the pressure equalization valve 18), there will be a risk of fuel leakage. The stop valve 20 makes possible, according to the invention, immediate shutting off of both liquid and gas flow towards the cap in the event of a collision.

The valve can of course, as an alternative, be placed on the other side of the ordinary valve means or on the outside of the valve body (i.e. in the filling pipe), still being within the scope of the patent claims.

## Claims

1. Tank cap for the filling pipe to a liquid container comprising a stop valve (20) in a through-passsage between an inside and an outside of the cap, said stop valve having a valve body (22) in which a valve element (34) is displaceably arranged, said valve body being comprised of a surrounding wall (24) connected to a bottom (26) with an inlet opening (30) and a top cover (28) with an outlet opening (32), **characterized in** that the valve element is a valve disc (34) arranged between said bottom (26) and cover (28) and provided with spacer means (42) so disposed on its bottom side as to form pressure equalization gaps between the spacer means and the bottom (26) when the valve disc (34) rests in its normal position via said spacer means (42) against said bottom, and that a surge of liquid against the inlet opening (30) is stopped immediately, since the valve disc (34) is displaceable by the surge of liquid, to an actuated position shutting off said outlet opening (32).

2. Tank cap according to claim 1, **characterized in** that the valve disc (34) has on its top side an annular gasket (40) and that the spacer means (42) on its underside are evenly distributed about the periphery of the valve element (34).

3. Tank cap according to claim 1 or 2, **characterized in** that each spacer means is in the form of a heel (42).

4. Tank cap according to claim 1 or 2, **characterized in** that each spacer means is in the form of a radially extending rib (42).

5. Tank cap according to one or more of the preceding claims, **characterized in** that the tank cap (2) has, in addition to the liquid stop valve (20), a pressure equalization valve (18) of a type known per se, coupled in series with said liquid stop valve (20), for equalizing pressure variations in a gas volume in the liquid container.

## Patentansprüche

1. Tankdeckel für das Füllrohr zu einem
Flüssigkeitsbehälter, umfassend ein Absperrventil (20) in einem Durchgang zwischen einer Innenseite und einer Außenseite des Deckels, wobei das Absperrventil einen Ventilkörper (22) besitzt, in dem ein Ventilelement (34) verstellbar angeordnet ist, und wobei sich der Ventilkörper zusammensetzt aus einer mit einem Boden (26), der eine Einlaßöffnung (30) und eine obere Abdeckung (28) mit einer Auslaßöffnung (32) aufweist, verbundenen Umrandungswand (24),
dadurch gekennzeichnet, daß
das Ventilelement eine zwischen dem Boden (26) und der Abdeckung (28) angeordnete Ventilscheibe (34) ist, die mit Abstandsmitteln (42) versehen ist, die so auf der Bodenseite der Ventilscheibe angeordnet sind, daß zwischen den Abstandsmitteln und dem Boden (26) Druckausgleichspalten gebildet werden wenn sich die Ventilscheibe (34) in ihrer normalen Position über die Abstandsmittel (42) gegen den Boden stützt, und daß ein Flüssigkeitsstrom gegen die Einlaßöffnung (30) sofort gestoppt wird, da die Ventilscheibe (34) durch den Flüssigkeitsstrom in eine Betätigungsposition verstellbar ist und die Auslaßöffnung (32) absperrt.

2. Tankdeckel nach Anspruch 1,
dadurch gekennzeichnet, daß
die Ventilscheibe (34) an ihrer Oberseite eine ringförmige Dichtung () besitzt, und daß die an deren Unterseite befindlichen Abstandsmittel (42) gleichmäßig um den Rand des Ventilelements (34) verteilt sind.

3. Tankdeckel nach Anspruch 1 oder 2,
dadurch gekennzeichnet, daß
jedes Abstandsmittel in der Form eines Absatzes (42) ausgestaltet ist.

4. Tankdeckel nach Anspruch 1 oder 2,
dadurch gekennzeichnet, daß
jedes Abstandsmittel in der Form einer sich radial erstreckenden Rippe (42) ausgestaltet ist.

5. Tankdeckel nach einem oder mehreren der vorhergenannten Ansprüche,
dadurch gekennzeichnet, daß
der Tankdeckel (2), zusätzlich zu dem Flüssigkeits-Absperrventil (20), ein Druckausgleichsventil (18) von an sich bekannter Art besitzt, das zum Ausgleich von Druckschwankungen in einem in dem Flüssigkeitsbehälter befindlichen Gasvolumen mit dem Flüssigkeits-Absperrventil (20) in Serie verbunden ist.

## Revendications

1. Bouchon de réservoir pour le conduit de remplissage d'un conteneur de liquide comprenant une vanne d'arrêt (20) dans un passage traversant entre un intérieur et un extérieur du bouchon, la vanne d'arrêt comportant un corps (22) de vanne dans lequel un élément de vanne (34) est agencé de façon déplaçable, le corps de vanne comprenant une paroi entourante (24) raccordée a un fond (26) avec une ouverture d'entrée (30) et un couvercle de dessus (28) avec une ouverture de sortie (32), caractérisé en ce que l'élément de vanne est un disque (34) de vanne agencé entre le fond (26) et le couvercle (28) et muni de moyens d'entretoisement (42) agencés dans son côté de fond de manière à former des cavités d'égalisation de pression entre les moyens d'entretoisement et le fond (26) lorsque le disque (34) de vanne s'appuie dans sa position normale par l'intermédiaire des moyens d'entretoisement (42) contre le fond, et en ce qu'une poussée de liquide contre l'ouverture d'entrée (30) est arrêtée immédiatement , étant donné que le disque (34) de vanne est déplaçable sous l'effet de la poussée de liquide vers une position actionnée obturant l'ouverture (32) de sortie.

2. Bouchon de réservoir selon la revendication 1, caractérisé en ce que le disque (34) de vanne comporte sur son côté de dessus un joint annulaire (40) et en ce que les moyens d'entretoisement (42) sur son dessous sont répartis uniformément autour de la périphérie de l'élément (34) de vanne.

3. Bouchon de réservoir selon la revendication 1 ou 2, caractérisé en ce que chacun des moyens d'entretoisement à la forme d'un talon (42).

4. Bouchon de réservoir selon la revendication 1 ou 2, caractérisé en ce que chacun des moyens d'entretoisement a la forme d'une nervure (42) s'étendant radialement.

5. Bouchon de réservoir selon l'une ou plus des revendications précédentes, caractérisé en ce que le bouchon de réservoir (2) comporte, en plus de la vanne (20) d'arrêt de liquide, une vanne (18) d'égalisation de pression du type connu en soi, couplée en série avec la vanne d'arrêt de liquide (20), pour égaliser les variations de pression dans un volume de gaz dans le conteneur de liquide.
